# EUROPÄISCHE PATENTANMELDUNG

(11) **EP 3 582 130 A1**
(43) Veröffentlichungstag der Anmeldung: **18.12.2019**
(21) Anmeldenummer: 19163471.6
(22) Anmeldetag: 18.03.2019
(51) Int. Cl.: G06F 21/60

(54) **VERFAHREN ZUR VERWALTUNG VON BENUTZERRECHTEN AN NUMERISCHEN STEUERUNGEN FÜR WERKZEUGMASCHINEN**

(30) Priorität: 12.06.2018 DE 102018209341
(71) Anmelder: Dr. Johannes Heidenhain GmbH, 83301 Traunreut (DE)
(72) Erfinder: LAMPERSPERGER, Andreas, 83379 Wonneberg (DE)

(57) **Zusammenfassung**

Es wird ein Verfahren zur Verwaltung von Rechten mittels einer Nutzerverwaltung an miteinander über ein Netzwerk (N) vernetzten Steuerungen (SX, SY, S1, S2, S3, S4, S5, S6) für Werkzeugmaschinen angegeben, wobei zur Einrichtung der Nutzerverwaltung alle zu verwaltenden Benutzer (BA, BB, BC), die miteinander vernetzten Steuerungen und mehrere Rollen (RB, RE), die jeweils einen Satz von Rechten definieren, verschiedenen Gruppen (G1, G2, SWA, SWB, FWA, FWB, EWA, EWB) zugeordnet werden. Ein bestimmter Benutzer an einer bestimmten Steuerung darf eine bestimmte Rolle nur dann ausführen, wenn wenigstens einer der Gruppen sowohl der bestimmte Benutzer als auch die bestimmte Steuerung und die bestimmte Rolle zugeordnet sind. Auf diese Weise ergibt sich eine einfach einzurichtende und leicht zu pflegende Datenstruktur.

## Beschreibung

### BEZEICHNUNG DER ERFINDUNG

### Verfahren zur Verwaltung von Benutzerrechten an Numerischen Steuerungen für Werkzeugmaschinen

### GEBIET DER TECHNIK

Die vorliegende Erfindung betrifft ein Verfahren zur Verwaltung von Benutzerrechten an miteinander vernetzten Numerischen Steuerungen für Werkzeugmaschinen. Das Verfahren soll sicherstellen, dass Benutzer mit unterschiedlichen Zuständigkeiten jeweils nur die Aktionen an einer Steuerung ausführen können, für die sie berechtigt sind.

### STAND DER TECHNIK

Numerische Steuerungen für Werkzeugmaschinen sind heutzutage auf robusten Industrie-PCs laufende Anwendungen, die zur Steuerung der Antriebe einer Werkzeugmaschine dienen. Auf den Steuerungen läuft inzwischen oft ein herkömmliches Betriebssystem wie Windows oder Linux. Für die Administration der Steuerungen und vor allem auch für die Einrichtung und den Betrieb der Werkzeugmaschinen wird eine Verwaltung von Rechten der verschiedenen Benutzer benötigt. Bei der Inbetriebnahme oder Wartung einer Werkzeugmaschine und ähnlichen Tätigkeiten sind erheblich weitergehende Rechte nötig als beim einfachen Abarbeiten bereits existierender Bearbeitungsprogramme, die auch als NC-Programme bezeichnet werden. Auch das Ändern der Bearbeitungsprogramme kann einem erfahrenen Bediener durchaus zugetraut werden, während unerfahrene Bediener keine Änderungen an Bearbeitungsprogrammen oder Einstellungen vornehmen sollen.

In großen PC-Netzwerken sind ähnliche Nutzerverwaltungen bekannt, hier ist ein dedizierter Server mit einem Verzeichnis aller Nutzer und deren Rechten üblich. Dabei kommt z.B. ein LDAP-Verzeichnisdienst (Lightweight Directory Access Protocol) zum Einsatz, der von allen Teilnehmern im Netzwerk erreichbar ist. So eine Struktur muss jedoch von einem erfahrenen Netzwerktechniker eingerichtet und gewartet werden.

Die typische Umgebung, in der numerisch gesteuerte Werkzeugmaschinen zu finden sind, ist eher eine Werkstatt mit einer kleinen Anzahl von Numerischen Steuerungen und Werkzeugmaschinen, die über ein Netzwerk miteinander verbunden sind.

Aus der nicht vorveröffentlichten Anmeldung DE 102017209565.2 ist eine Numerische Steuerung mit integrierter Nutzerverwaltung bekannt, mit der sich auf besonders einfache Weise so ein Verzeichnisdienst ohne vertiefte Netzwerkkenntnisse für mehrere miteinander vernetzte Steuerungen einrichten lässt.

Herkömmliche Verzeichnisdienste sind allerdings nicht dafür gedacht, um damit eine Rechteverwaltung für die verschiedenen Benutzer aufzubauen. Sie funktionieren eher wie ein Verzeichnis von Benutzern und Benutzergruppen, zu denen bestimmte Eigenschaften gespeichert werden können. Es ist zwar möglich, zu jedem Eintrag im Verzeichnis bestimmte Nutzerrechte zu hinterlegen, die Einrichtung und Pflege eines solchen Systems ist dann aber aufwändig und wenig flexibel.

### ZUSAMMENFASSUNG DER ERFINDUNG

Es ist daher Aufgabe der Erfindung, ein Verfahren zur Verwaltung von Rechten mittels einer Nutzerverwaltung an miteinander vernetzten Steuerungen für Werkzeugmaschinen anzugeben, mit dessen Hilfe die Einrichtung und Verwaltung der verschiedenen Benutzer und ihrer Rechte bei der Bedienung einer Mehrzahl von miteinander vernetzten Steuerungen von Werkzeugmaschinen besonders einfach gelingt.

Diese Aufgabe wird gelöst durch ein Verfahren gemäß Anspruch 1. Vorteilhafte Details dieses Verfahrens ergeben sich auch aus den von Anspruch 1 abhängigen Ansprüchen.

Es wird ein Verfahren zur Verwaltung von Rechten mittels einer Nutzerverwaltung an miteinander vernetzten Steuerungen für Werkzeugmaschinen angegeben, wobei zur Einrichtung der Nutzerverwaltung alle zu verwaltenden Benutzer, die miteinander vernetzten Steuerungen und mehrere Rollen, die jeweils einen Satz von Rechten definieren, verschiedenen Gruppen zugeordnet werden. Ein bestimmter Benutzer an einer bestimmten Steuerung darf eine bestimmte Rolle nur dann ausführen, wenn wenigstens einer der Gruppen sowohl der bestimmte Benutzer als auch die bestimmte Steuerung und die bestimmte Rolle zugeordnet sind. Auf diese Weise ergibt sich eine einfach einzurichtende und leicht zu pflegende Datenstruktur, die auf besonders anschauliche Weise eine Verwaltung von Rechten ermöglicht.

Insbesondere sind einer Gruppe neben Benutzern, Steuerungen und Rollen auch andere Gruppen zugeordnet, so dass eine Zuordnung von Benutzern, Steuerungen oder Rollen indirekt über die Zuordnung einer Gruppe zu einer weiteren Gruppe erfolgen kann. Hierdurch verbessert sich die Flexibilität der Nutzerverwaltung zusätzlich. Weil solchen Gruppen eine anschauliche Bedeutung gegeben werden kann, lässt sich die Nutzerverwaltung flexibel an die Gegebenheiten vor Ort anpassen und später leicht warten und erweitern. Besonders vorteilhaft ist es, wenn die Nutzerverwaltung auf einem herkömmlichen Verzeichnisdienst aufsetzt. Da solche Verzeichnisdienste von sich aus keine Rechte oder Rollen verwalten können, werden Rollen als leere Gruppen angelegt. Da auch solche Gruppen selbst wieder anderen Gruppen zugeordnet werden können, ist der Aufbau einer besonders einfachen Nutzerverwaltung möglich.

Leere Gruppen machen in einem Verzeichnisdienst zunächst wenig Sinn, denn Gruppen existieren dort, um Nutzer und andere Gruppen zusammenzufassen. Die hier beschriebene Nutzerverwaltung stellt jedoch eine Auswertungslogik bereit, mit der so eine leere Gruppe als Platzhalter für einen Satz von Rechten (entsprechend einer Rolle) und deren Zuweisung zu anderen Gruppen eine sehr flexible Möglichkeit zur Verwaltung von Rechten an miteinander vernetzten Steuerungen ergibt.

Zum Aufsetzen und Anwenden so einer Nutzerverwaltung in einem von allen vernetzten Steuerungen erreichbaren Verzeichnisdienst sind also beispielsweise folgende Schritte notwendig:
- Anlegen aller Benutzer im Verzeichnisdienst.
- Anlegen aller Steuerungen im Verzeichnisdienst.
- Anlegen aller Rollen als leere Gruppen im Verzeichnisdienst.
- Bei Bedarf anlegen von Gruppen, die mehrere Steuerungen oder mehrere Benutzer zusammenfassen.
- Anlegen von Gruppen, denen direkt oder indirekt Benutzer, Steuerungen und Rollen zugeordnet sind.

Will nun ein bestimmter Benutzer an einer bestimmten Steuerung eine bestimmte Rolle ausführen, so muss geprüft werden, ob es eine Gruppe gibt, der direkt oder indirekt dieser bestimmte Benutzer, diese bestimmte Steuerung und diese bestimmte Rolle zugeordnet ist. In diesem Fall erhält der Benutzer die gewünschten Rechte, andernfalls nicht.

Besonders für kleinere Betriebe kann es nützlich sein, wenn der Verzeichnisdienst auf einer der miteinander vernetzten Steuerungen läuft. Ein besonders einfaches Verfahren zur Einrichtung so eines Verzeichnisdienstes ist im einleitend genannten Stand der Technik offenbart.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: ein erstes, besonders einfaches Ausführungsbeispiel der Erfindung,
- Figur 2: ein zweites, etwas komplexeres Ausführungsbeispiel der Erfindung,
- Figur 3: mehrere miteinander vernetzte Steuerungen.

### BESCHREIBUNG DER AUSFÜHRUNGSFORMEN

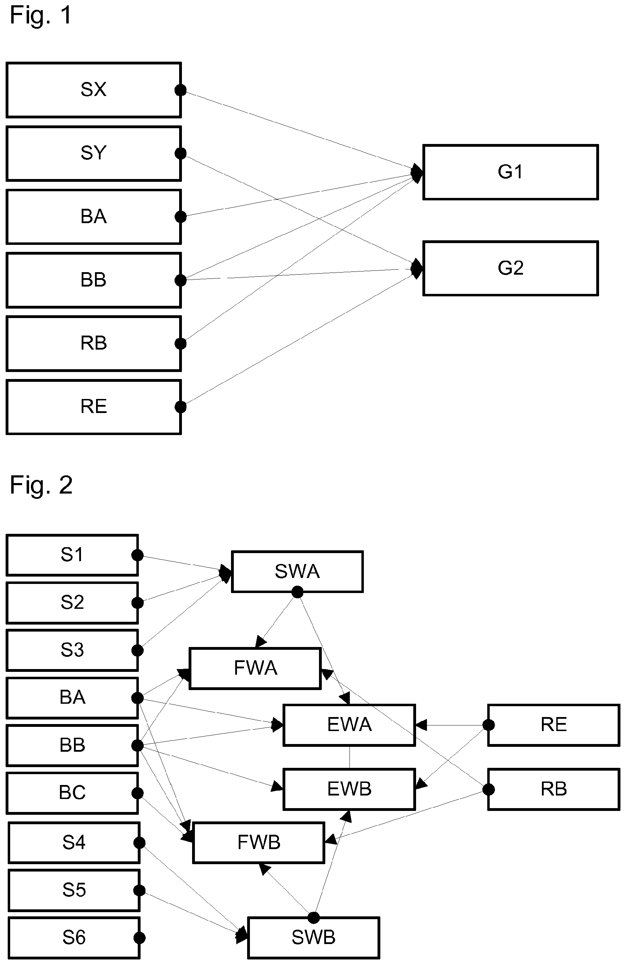

Die Figur 1 zeigt ein besonders einfaches erstes Ausführungsbeispiel der Erfindung. Zwei miteinander vernetzte Steuerungen SX, SY werden von zwei verschiedenen Benutzern BA, BB bedient. Die Nutzerverwaltung stellt dazu zwei verschiedene Rollen RB, RE bereit. Die Rolle RB erlaubt die einfache Bedienung einer Steuerung SX, SY. Darunter fällt beispielsweise das Abarbeiten eines NC-Programms, mit dem die Werkzeugmaschine ein Werkstück bearbeitet, etwa mittels eines Fräsprozesses. Die Rolle RB erlaubt es, dieses NC-Programm auszuwählen und zu starten. Demgegenüber erlaubt es die Rolle RE zusätzlich, ein NC-Programm zu ändern oder ein neues NC-Programm zu erstellen, und andere anspruchsvollere Aufgaben an der Steuerung SX, SY oder der damit jeweils gesteuerten Werkzeugmaschine auszuführen.

Im Rahmen der Erfindung sind die Steuerungen SX, SY, die Benutzer BA, BB und die Rollen RB, RE als Einträge in einem Verzeichnisdienst wie LDAP oder Microsoft Active Directory angelegt. Außerdem sind diese Einträge zwei verschiedenen Gruppen G1, G2 zugeordnet:
Der Gruppe G1 ist die Steuerung SX zugeordnet, außerdem die beiden Benutzer BA, BB und die Rolle RB. Hier ist schon anschaulich klar, dass beide Benutzer BA, BB auf der Steuerung SX mit der Rolle RB arbeiten dürfen.

Allgemein formuliert darf ein bestimmter Benutzer BA, BB an einer bestimmten Steuerung SX, SY eine bestimmte Rolle RB, RE genau dann ausführen, wenn wenigstens einer der Gruppen G1, G2 sowohl der bestimmte Benutzer BA, BB als auch die bestimmte Steuerung SX, SY und die bestimmte Rolle RE, RB zugeordnet sind.

So ist der Benutzer BA der Gruppe G1 zugeordnet (er ist Mitglied dieser Gruppe G1). Außerdem sind dieser Gruppe G1 auch die Steuerung SX und die Rolle RB zugeordnet. Der Benutzer BA darf also an der Steuerung SX die Rolle RB ausführen, bzw. mit den für diese Rolle RB festgelegten Rechten arbeiten. Dies gilt aber nicht für die Steuerung SY, denn diese ist nur der Gruppe G2 zugeordnet, in der der Benutzer BA kein Mitglied ist. Da auch die Rolle RE nur der Gruppe G2 zugeordnet ist, kann BA die Rolle RE weder an der Steuerung SX noch an der Steuerung SY ausüben. Benutzer BA besitzt an der Steuerung SY keinerlei Rechte, an der Steuerung SX nur die der Rolle RB.

Anders sieht es für den Benutzer BB aus, denn er ist Mitglied in beiden Gruppen G1 und G2. Über die weiteren Zuordnungen zu bzw. Mitgliedschaften in diesen Gruppen G1, G2 hat der Benutzer BB an der Steuerung SX die Rechte der Rolle RB, sowie an der Steuerung SY die Rechte der Rolle RE. Benutzer BB kann also an der Steuerung SX NC-Programme auswählen und starten. An der Steuerung SY kann er diese NC-Programme zusätzlich ändern oder neue erstellen.

Es sei angemerkt, dass die beiden Rollen RB und RE in einem Verzeichnisdienst wie LDAP (das Objekte wie Rollen nicht kennt, sondern nur Nutzer und Gruppen von Nutzern) als leere Gruppen angelegt sind. Indem diese leeren Gruppen jeweils einer der beiden Gruppen G1 und G2 zugeordnet werden, haben diese beiden Gruppen G1, G2 vor allem die Funktion, den mit ihnen verknüpften Benutzern BA, BB die jeweilige Rolle RB, RE auf den mit ihnen verknüpften Steuerungen SX, SY zu geben. Diese auf die Zuweisung von Rechten ausgerichtete Deutung der Gruppen G1, G2 ist aber nicht zwingend, wie im nächsten Ausführungsbeispiel gezeigt wird.

Die Figur 2 zeigt ein zweites, etwas komplexeres Ausführungsbeispiel der Erfindung. Hier sind insgesamt sechs Steuerungen S1-S6 miteinander vernetzt. Drei dieser Steuerungen (nämlich S1, S2, S3) stehen in einer ersten Werkstatt und sind daher einer Gruppe SWA zugeordnet. Diese Gruppe ist also sehr anschaulich eine Gruppe von Steuerungen, die in der ersten Werkstatt stehen. Die drei weiteren Steuerungen S4, S5, S6 stehen in einer zweiten Werkstatt und sind der Gruppe SWB zugeordnet. Wird später eine weitere Werkzeugmaschine mit einer weiteren Steuerung in einer der beiden Werkstätten aufgestellt, so kann die Nutzerverwaltung leicht angepasst werden, in dem die weitere Steuerung der entsprechenden Gruppe SWA oder SWB zugeordnet wird.

Es ist außerdem eine Gruppe FWA angelegt, in der die Gruppe SWA Mitglied ist, und die Rolle RB. Damit dürfen alle Benutzer BA, BB, die ebenfalls der Gruppe FWA zugeordnet sind, an den Steuerungen S1, S2, S3 der ersten Werkstatt als Bediener arbeiten. Der Gruppe FWA sind nämlich die Benutzer BA und BB sowie die Rolle RB direkt zugeordnet, und alle Steuerungen S1, S2, S3 der ersten Werkstatt indirekt über die Gruppe SWA. Benutzer BC kann die Steuerungen S1, S2, S3 der ersten Werkstatt nicht bedienen, denn er ist kein Mitglied der Gruppe FWA.

Demgegenüber dürfen alle drei Benutzer BA, BB, BC an den Steuerungen S4, S5, S6 der zweiten Werkstatt als Bediener arbeiten, denn über die Gruppe SWB sind diese Steuerungen indirekt Mitglieder der Gruppe FWB, ebenso wie die drei Benutzer BA, BB, BC und die Rolle RB, die der Gruppe FWB direkt zugeordnet sind.

Mit den erhöhten Rechten eines Einrichters darf in der ersten Werkstatt sowohl Benutzer BA als auch Benutzer BB arbeiten, denn beide sind Mitglied in der Gruppe EWA, der auch die Rolle RE und die Gruppe SWA zugeordnet ist.

Mit den erhöhten Rechten eines Einrichters darf in der zweiten Werkstatt nur der Benutzer BB arbeiten, denn nur er ist Mitglied in der Gruppe EWB, der außerdem die Rolle RE und die Gruppe SWB zugeordnet ist.

Ein weiterer Benutzer kann in die Nutzerverwaltung dadurch aufgenommen werden, dass er im Verzeichnisdienst angelegt und nach Bedarf den Gruppen FWA, FWB (Bedienen in der ersten bzw. zweiten Werkstatt) oder EWA, EWB (Einrichten in der ersten bzw. zweiten Werkstatt) zugeordnet wird.

In anderen Umgebungen können auch Gruppen von verschiedenen Steuerungstypen oder verschiedenen Bearbeitungsmaschinen angelegt werden. Es können auch Gruppen nützlich sein, die Benutzer mit jeweils unterschiedlichem Ausbildungsstand umfassen. Es können zusätzliche Rollen als leere Gruppen angelegt werden, mit denen eine feinere Unterteilung der Rechte möglich wird.

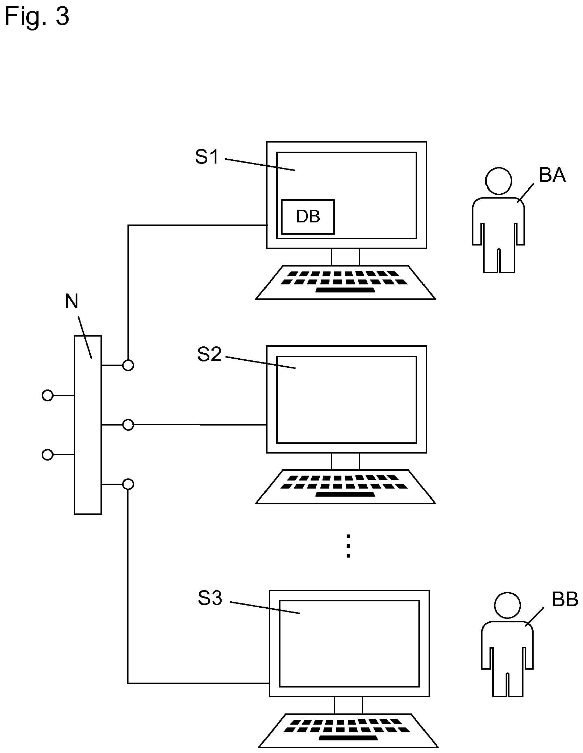

Die Figur 3 zeigt schematisch mehrere Steuerungen S1, S2, S3, die über ein Netzwerk N miteinander vernetzt sind. Auf einer der Steuerungen S1 liegt eine Datenbank eines Verzeichnisdienstes DB, auf das die anderen Steuerungen S2, S3 über das Netzwerk N zugreifen können. Für jeden Benutzer BA, BB, der sich an einer der Steuerungen S1, S2, S3 anmeldet, kann also wie oben beschrieben dessen Berechtigung abgefragt werden. Eine einzelne Steuerung bzw. das Netzwerk N mit diesen Steuerungen S1, S2, S3 ist damit zur Ausführung des oben beschriebenen Verfahrens eingerichtet.

Aufgesetzt auf einen herkömmlichen Verzeichnisdienst in einem Netzwerk aus Numerischen Steuerungen erhält man mit dem beschriebenen Verfahren zur Verwaltung von Rechten ein sehr flexibles Werkzeug zur Nutzerverwaltung.

## Patentansprüche

1. Verfahren zur Verwaltung von Rechten mittels einer Nutzerverwaltung an miteinander vernetzten Steuerungen für Werkzeugmaschinen, wobei zur Einrichtung der Nutzerverwaltung alle zu verwaltenden Benutzer (BA, BB, BC), die miteinander vernetzten Steuerungen (SX, SY, S1, S2, S3, S4, S5, S6) und mehrere Rollen (RB, RE), die jeweils einen Satz von Rechten definieren, verschiedenen Gruppen (G1, G2, SWA, SWB, FWA, FWB, EWA, EWB) zugeordnet werden, und wobei ein bestimmter Benutzer an einer bestimmten Steuerung eine bestimmte Rolle nur dann ausführen darf, wenn wenigstens einer der Gruppen (G1, G2, SWA, SWB, FWA, FWB, EWA, EWB) sowohl der bestimmte Benutzer als auch die bestimmte Steuerung und die bestimmte Rolle zugeordnet sind.

2. Verfahren nach Anspruch 1, wobei einer Gruppe (G1, G2, SWA, SWB, FWA, FWB, EWA, EWB) neben Benutzern (BA, BB, BC), Steuerungen (SX, SY, S1, S2, S3, S4, S5, S6) und Rollen (RB, RE) auch andere Gruppen (G1, G2, SWA, SWB, FWA, FWB, EWA, EWB) zugeordnet sind, und somit eine Zuordnung von Benutzern (BA, BB, BC), Steuerungen (SX, SY, S1, S2, S3, S4, S5, S6) oder Rollen (RB, RE) indirekt über die Zuordnung einer Gruppe zu einer weiteren Gruppe erfolgt.

3. Verfahren nach Anspruch 1 oder 2, wobei die Nutzerverwaltung auf einem Verzeichnisdienst (DB) aufsetzt, der von allen vernetzten Steuerungen (SX, SY, S1, S2, S3, S4, S5, S6) erreichbar ist.

4. Verfahren nach Anspruch 3, wobei der Verzeichnisdienst auf einer der vernetzten Steuerungen (SX, SY, S1, S2, S3, S4, S5, S6) bereitgestellt wird.

5. Verfahren nach Anspruch 3 oder 4, wobei die Rollen (RB, RE) als leere Gruppen angelegt sind.

6. Steuerung für eine Werkzeugmaschine, eingerichtet um über ein Netzwerk (N) mit weiteren Steuerungen (SX, SY, S1, S2, S3, S4, S5, S6) vernetzt zu werden und ein Verfahren nach einem der vorhergehenden Ansprüche auszuführen.
